# EUROPEAN PATENT APPLICATION

(11) **EP 3 875 822 A1**
(43) Date of publication of application: **08.09.2021**
(21) Application number: 21160315.4
(22) Date of filing: 02.03.2021
(51) Int. Cl.: F16L 21/00, F16L 21/035, F16L 37/02, F16L 37/084, F16L 47/06

(54) **A COUPLER FOR COUPLING TO A PIPE AND METHODS OF FORMING THE COUPLER**

(30) Priority: 03.03.2020 NL 2025033
(71) Applicant: Pipelife Nederland B.V., 1601 MA Enkhuizen (NL)
(72) Inventor: Schaaper, Pim, 1689 CS Zwaag (NL); Ploeg, Mark, 1674 PX Opperdoes (NL); Kruijer, Martinus Petrus, 1705 TP Heerhugowaard (NL)
(74) Representative: Nederlandsch Octrooibureau

(57) **Abstract**

A coupler for coupling to a pipe for protecting cables underground includes a tubular body formed of a first portion with a plurality of teeth on an outer side; a second portion with a plurality of teeth on an outer side; and a central portion connecting the first portion and the second portion. Such a coupler can couple one or more pipes together.

## Description

### Field of the invention

The invention relates to a coupler for coupling to a pipe and a method of forming the coupler.

### Background of the invention

Pipes or/and tubes are commonly used in various fields, including pipes for protecting cables underground. To connect pipe sections with a certain tensile strength, there are various conventional techniques including gluing or welding together the pipe sections. Another method of connection is using a coupler with an opening at each end and a movable metal gripper at the inside of the coupler for increasing the friction force between a pipe end and the coupler when a pipe end is pulled out from the coupler.

Horizontal drilling, sometimes known as directional boring, is a method of installing such underground pipes and utilities within. This method typically includes forming a shallow underground path from an opening, and then a pipeline, conduit and/or cables are pulled through after the borehole is formed. In such a case, pipes are typically welded end to end, for example through butt welding. This provides the needed strength while ensuring a smooth inside of the pipe, which is needed when sensitive cables (e.g., electrical cables) are to be pulled through the pipeline.

### Summary of the invention

According to a first aspect of the invention, a coupler for coupling to a pipe comprises a tubular body comprising a first portion comprising a plurality of teeth on an outer side; a second portion comprising a plurality of teeth on an outer side; and a central portion connecting the first portion and the second portion, wherein the tubular body has at least two substantially planar outer ends. In this context 'planar outer end' refers to a generally uninterrupted planar circumference at the outer ends of the tubular body. The term "substantially" is used to indicate that the circumference of the opening defined by each outer end of the pipe lies in a single plane or only varies to a limited extend along an axial direction, e.g., over a distance of less than 5% of the tube diameter, or less than 2% of the tube diameter. For example, when the tubular body is cylindrical, the outer ends may define a substantially circular circumferential opening in a plane perpendicular to the axial direction of the pipe.

Such a coupler can enable simple, but secure and effective coupling of pipes that are subject to tensile forces. The teeth on the outer side of the coupler can secure to the inside of pipes which fit around the coupler on each portion, thereby ensuring the pipes stay connected to the coupler, and therefore each other.

The substantially planar outer ends allow for a smooth transition between the pipe and the tubular body. Having a substantially smooth transition between the tubular body and the pipes can be especially useful in applications where cables are to be pulled through the pipes and coupler, leaving fewer places where the cables could become snagged and damaged and reducing friction in the pull-through.

According to an embodiment, the tubular body is substantially smooth inside. Optionally, the tubular body has a substantially consistent inner diameter throughout. Having a substantially smooth inside and/or a substantially consistent inner diameter throughout the tubular body can be especially useful in applications where cables are to be pulled through the pipes and coupler, leaving fewer places where the cables could become snagged and damaged and reducing friction in the pull-through.

According to an embodiment the tubular body is formed of a first tube comprising the first portion and a second tube comprising the second portion, and wherein the central portion comprises part of the first tube and part of the second tube. The first tube and second tube may each have an end with a substantially flat outer circumferential edge, configured to be arranged end to end abutting each other. Alternatively, the tubes may be connected using a spigot connection, wherein the central portion of the first tube is configured to fit around the central portion of the second tube or vice versa.

According to a further embodiment the coupler comprises a securing mechanism for selectively securing the first tube to the second tube. The securing mechanism may for instance comprise a sleeve configured to be fastened around the central portion using one or more fasteners. Advantageous to such a connection is that the pipes may be decoupled easily by removal of the sleeve. This allows for the efficient reuse and/or recycling of the components. In addition, the tubes may be pre-assembled in the pipes, allowing for quick and easy installation during the horizontal drilling. The securing mechanism can be tightened to the pipe end when a pipe is already partially inserted into the ground. This allows for a quick and easy connection.

According to an embodiment, the first tube is provided with a socket end and the second tube is provided with a spigot end. This allows for an easy connection between the tubes. Optionally, the securing mechanism may comprise a key ring that can be arranged in a keyway to secure the tubes together. Advantageous to such a connection is that the pipes may be coupled and decoupled easily by insertion or removal of the key ring. This allows for the efficient reuse and/or recycling of the components. In addition, the tubes may be pre-assembled in the pipes, allowing for quick and easy installation during the horizontal drilling. The securing mechanism can be tightened to the pipe end when a pipe is already partially inserted into the ground. This allows for a quick and easy connection.

According to an embodiment, the securing mechanism has an outer diameter substantially equal to an outer diameter of the pipe. This allows for a smooth outer circumference of the pipes connected by a coupler, making the assembly of two pipes coupled through a coupler less prone to damages.

According to an embodiment, a seal is provided between abutting surfaces of the first and second tube to prevent leakage.

According to an embodiment, the central portion comprises a stop edge extending circumferentially outward from the central portion. Optionally, the central portion further comprises one or more grooves on the side of the stop edge. Such a stop edge can provide a stable central outer part to easily see and ensure that each pipe is secured fully to coupler. One or more grooves can provide a space for one or more seals, such as o-ring seals, to seal pipes to the coupler. In embodiments wherein the tubular body comprises two tubes, typically a stop edge is provided on each of the two tubes, arranged to ensure that each of the pipes is secured fully to a tube of the coupler.

According to an embodiment, the teeth extend circumferentially outward and toward the central portion on each of the first portion and the second portion. Having circumferentially outward extending teeth provide for a secure and effective connection between the coupler and pipes.

According to an embodiment, each of the first portion and the second portion has 2-20 teeth, for example, 4-15 teeth, 5-10 teeth or 7 teeth. Optionally, the plurality of teeth extend at an angle of about 10 degrees to 45 degrees with respect to the horizontal. Further, optionally, the teeth have pointed edges. The amount, size, angle, shape and spacing of teeth can depend on the coupling force required, size and/or materials used in coupler and/or pipes and other factors related to the coupler and/or pipes.

According to an embodiment, the coupler is formed of a plastic material, preferably Polyoxymethylene (POM), Polyether ether ketone (PEEK), or Polyvinyl chloride (PVC). Such materials are particularly suitable for coupling plastic pipes (e.g., made of polyethylene, polyvinylchloride, or polypropylene). Such a plastic coupler can securely couple such pipes and hold even when pipes are deformed under tensile forces.

According to an embodiment, a first pipe and/or a second pipe are connected to the first portion of the coupler with an inner diameter of the first pipe connecting around the plurality of teeth of the first portion of the coupler. Optionally, the first pipe and/or the second pipe have a first inner diameter and a second inner diameter, wherein the second inner diameter is larger than the first inner diameter and the second inner diameter fits around the first portion of the coupler. The second inner diameter can optionally be a bit smaller than an outer diameter of the teeth, e.g., 0.5% - 5% smaller, which can ensure proper gripping of the teeth against the pipe.

Further optionally, the first inner diameter is substantially equal to the inner diameter of the coupler. Having two diameters in the pipe can enable the pipe to easily connect around the coupler, and form an inner passageway with a diameter that is substantially the same through the pipe(s) and the coupler. This is particularly useful when cables or other things must be pulled through pipes, eliminating edges that could damage the cables during the pull-through.

According to an embodiment, the first pipe comprises one or more complementary coupling features on an inner circumference for connecting to the coupler. Such one or more coupling features could be, for example, teeth or grooves complementary in shape to the plurality of teeth on the first portion of the coupler. Such one or more complementary coupling features can further ensure that the coupler and pipe securely connect to each other.

According to an embodiment, the first and/or second pipes are formed of polyethylene. Such a coupler can be especially useful with polyethylene pipes, as the outer teeth of the coupler can ensure that the pipe stays coupled even under deformation forces, for example, stretching due to tensile forces on the pipe(s).

According to an embodiment, the coupler with one or more pipes further comprises one or more seals. Using one or more seals can ensure that the connection between the coupler and pipe stays tightly connected, for example, preventing outside debris from entering the insides of pipes and coupler. The one or more seals can also help to protect the connection surfaces and features from debris or fluids which could degrade them over time.

According to a further aspect of the invention, a method of forming a coupler comprises forming a first portion with a tubular body and a plurality of circumferential teeth on an outer side of the tubular body and a substantially planar outer end; forming a second portion with a tubular body and a plurality of circumferential teeth on an outer side of the tubular body and a substantially planar outer end; and forming a central portion with a stop edge connecting the first portion and second portion. Optionally, the method includes machining and/or injection moulding. Such a method can be a simple and quick way of forming a coupler for joining two pipes together securely.

According to an embodiment, the method further comprises forming a groove on at least one side of the stop edge, optionally on each side of the stop edge. Such a groove can provide space for one or more seals further securing the connection between the pipe and coupler. It will be understood that in embodiments with two stop edges, only groove may be provided on the side where the pipe abuts the stop edge. Typically, the method the comprises forming a groove an one side of each of the two stop edges.

According to a further aspect of the invention, a method of forming a pipe to join with a coupler comprises hot forming combined with machining and/or injection moulding end parts to connect to pipes. Such a connection could be, for example, through welding. Such a method can form end portions suited for connecting to the coupler described herein.

According to a further aspect of the invention, a method of connecting a first pipe to a coupler is provided. The coupler comprises a first portion comprising a plurality of teeth on an outer side, a second portion comprising a plurality of teeth on an outer side, and a central portion between the first portion and the second portion, the central portion comprising a stop edge extending circumferentially outward. The method comprises inserting the first portion of the coupler into an end of the first pipe until the end of the first pipe abuts the stop edge on a first side. Optionally, the method includes inserting a second pipe onto the second portion of the coupler until an end of the second pipe abuts the stop edge on a second side opposite the first pipe. Such a method is a simple way of coupling one or more pipes to a coupler, without needing large welding or other types of equipment. Typically, a small hydraulic device is all which is needed for such a coupling, enabling easy coupling on-site.

According to an embodiment, the method further comprises connecting one or more sealing rings between the coupler and the first and/or second pipes.

### Brief description of the Figures

Embodiments of the present invention will be described hereinafter, by way of example only, with reference to the accompanying drawings which are schematic in nature and therefore not necessarily drawn to scale. Furthermore, like reference signs in the drawings relate to like elements.
Figure 1 shows a coupler;
Figure 2a schematically shows a coupler and two pipes;
Figure 2b shows the coupler and two pipes connected together;
Figure 3a schematically shows a second embodiment of a coupler and two pipes; and
Figure 3b shows the coupler and two pipes of Fig. 3a connected together.
Figure 4 shows a further embodiment of a coupler.
Figure 5a schematically shows an embodiment of a coupler having a tubular body formed from two separate tubes.
Figure 5b shows one of the tubes in Fig. 5a.
Figure 5c shows a sleeve for securing the two tubes in Fig. 5a.
Figure 6 shows a further embodiment of a coupler having a tubular body formed of two separate tubes, wherein the tubes are connected using a spigot connection.

### Detailed description

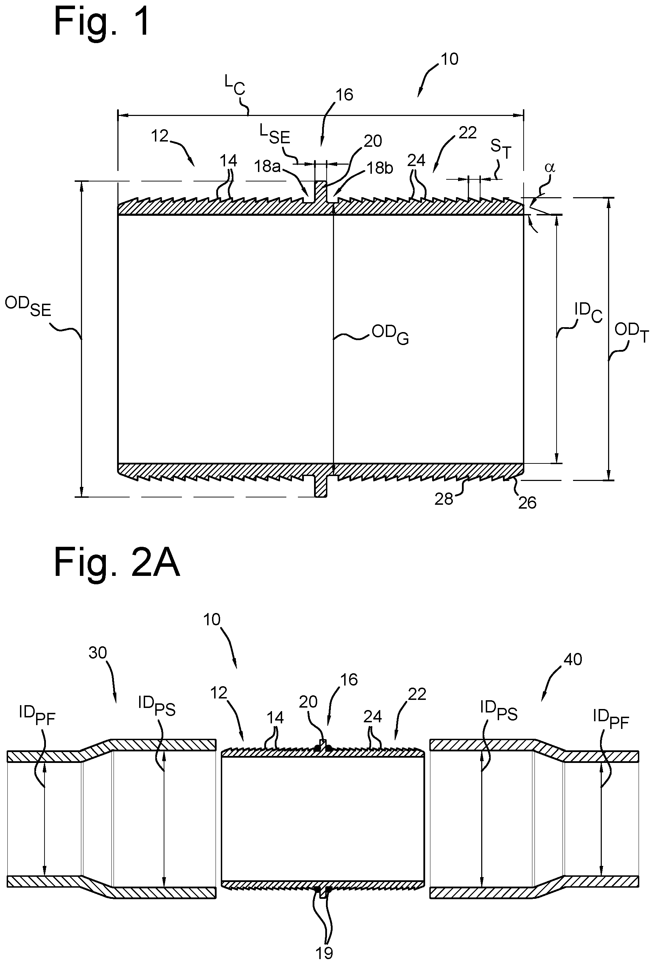

Figure 1 shows a cross-section of a coupler 10. Coupler 10 includes first portion 12 with teeth 14; central portion 16 with grooves 18a, 18b and stop edge 20; and second portion 22 with teeth 24. Coupler 10 is tubular in shape, generally with a smooth and substantially constant inner diameter (IDc).

Teeth 14, 24 extend circumferentially around the outer diameter of first portion 12 and second portion 22. First portion 12 and second portion 22 generally have the same number of teeth, typically 2 to 20 teeth, preferably 4-7 teeth, though it could be more or less in different embodiments. Teeth 14, 24 typically have the same shape, mirrored from first portion 12 to second portion 22. In the embodiment shown, teeth have a first edge 26 extending at an angle α toward central portion 16 and a second edge 28 extending substantially vertical. This provides a pointed apex of teeth 14, 24, which can help to secure coupler 10 to pipes (see Fig. 2a).

Stop edge 20 is typically a rectangular projection extending radially outward from coupler 10 at a central location of coupler 10. Stop edge 20 typically extends further outward than teeth 14, 24. In the embodiment shown in Fig. 1, each side of stop edge 20 includes a groove 18a, 18b. These grooves 18a, 18b can hold a seal, e.g., an o-ring, for sealing coupler 10 to pipes. Alternatively or in addition, coupler 10 could include grooves or other structural features for accommodating one or more seals, for example, at a different location on coupler 10.

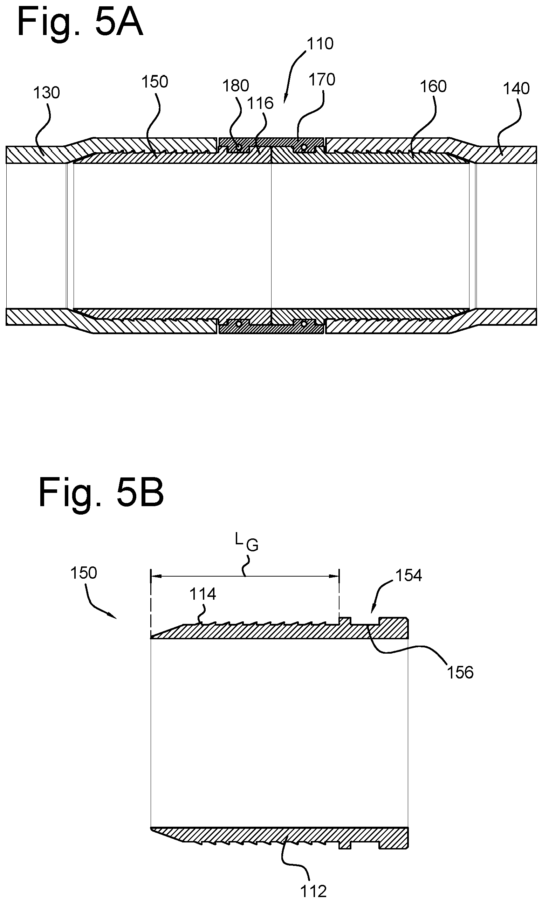

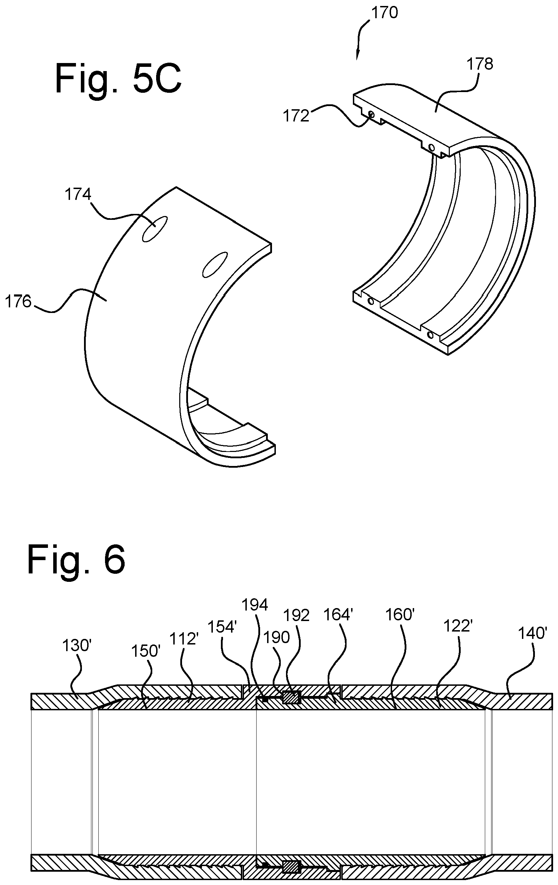

In this embodiment, coupler 10 is made as one part, for example through injection moulding and/or machining. Coupler 10 is typically formed of a plastic material, for example, Polyoxymethylene (POM), Polyether ether ketone (PEEK), or Polyvinyl chloride (PVC); though in some cases could be formed of other materials. As explained below in relation to Figures 5 and 6, the coupler may also be formed of multiple parts.

Though coupler 10 could vary greatly in size and dimensions depending on intended use, example coupler dimensions are: coupler length Lc of 206 mm; stop edge length L_{SE} of 6 mm; coupler inner diameter IDc of 126 mm; outer diameter at tips of teeth OD_{T} of 143 mm; outer diameter at stop edge OD_{SE} of 160 mm; outer diameter at grooves OD_{G} of 138 mm; angle of teeth α of 20 degree; teeth spacing S_{T} of 6 mm. Such a coupler would be appropriate for coupling pipes of about 160 mm outer diameter, with a wall-thickness of 9.5 mm.

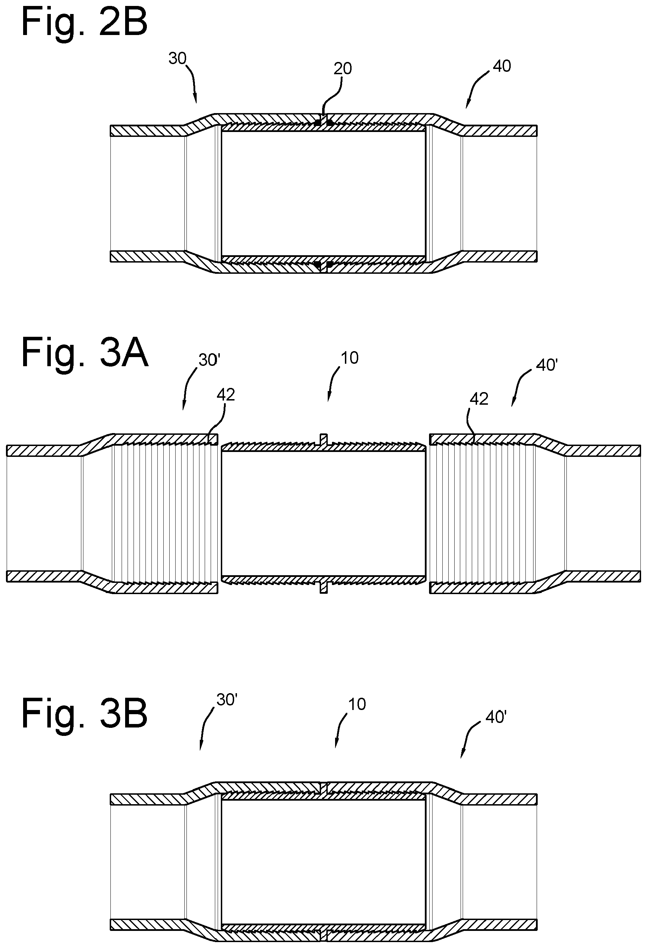

Figure 2a schematically shows coupler 10 and a first pipe 30 and second pipe 40; and Fig. 2b shows first pipe 30 and second pipe 40 connected to coupler 10. Each of first pipe 30 and second pipe 40 includes first inner diameter ID_{PF} and second inner diameter ID_{PS} at the respective ends of first and second pipes 30, 40. Second inner is diameter ID_{PS} is larger than first inner diameter ID_{PF}. First and second pipes 30, 40 are formed of a plastic material, for example, polyethylene ("PE"), polyvinylchloride ("PVC") or polypropylene ("PP").

Coupler 10 is used to securing first pipe 30 to second pipe 40, forming a substantially constant and smooth inner diameter from first pipe 30 to second pipe 40 through coupler 10. The circumference at the outer ends is uninterrupted, leading to outer ends of the tubular body that are substantially planar and thereby provide for a smooth transition between the pipe inner wall and the inner wall of the tubular body. One or more seals 19, e.g., o-rings, can be placed in grooves 18a, 18b, though some embodiments may not use seals. First pipe 30 is pushed onto first portion 12 of coupler 10 until the end of first pipe 30 abuts stop edge 20. This can be done using a machine, such as a hydraulic device, for applying the proper force required to connect first pipe 30 around coupler 10. The force required can vary depending on pipe and coupler dimensions and materials, but can be around 20 kN. Second pipe 40 is then connected to second portion 14 of coupler in the same general manner. In some cases, coupler 10 could be connected to first pipe 30 at a different location (e.g., at a manufacturing or storage facility) and only connected to second pipe 40 on location of use.

First pipe 30 and second pipe 40 have a second inner diameter ID_{PS} that is typically a bit smaller (e.g., 0.5%-5% smaller) than the outer diameter of the teeth OD_{T} of coupler 10. This ensures that first and second pipes 30, 40 secure to coupler 10, with teeth 14, 24 engaging the inside of first and second pipes 30, 40 and providing a tensile tight connection without the need of additional connecting components (e.g., adhesive, gripping rings). The first inner diameters ID_{PF} of pipes 30, 40 are substantially the same as the inner diameter of coupler IDc, providing a constant and smooth surface through first pipe 30, coupler 10 and second pipe 40.

Coupler 10, through circumferential outer teeth 14, 24 provides an easy and secure way of connecting pipes 30, 40 for use together. This can be particularly useful in horizontal drilling operations and/or to protect cables in power networks. In such systems, pipes are placed and then cables are pulled through the pipes. The use of coupler 10 allows for a continuous pipe network with a constant and smooth inner diameter to reduce or eliminate the chance of cables getting snagged and/or damaged during installation (or removal). Additionally, the smooth constant inner diameter decreases the friction involved in pulling cables through the pipeline. Providing a coupler 10 with a plurality of teeth 14, 24 on the outside circumference also allows for the gripping force to increase as the pipes 30, 40 are pulled apart (as the pipe contracts when under tensile forces) thereby ensuring pipes 30, 40 stay coupled (e.g., for drilling operations and/or cable protection) even under significant tensile forces.

As discussed in the background, horizontal directional drilling ("HDD") pipes were typically butt welded together in the past. Coupler 10 provides an easier and faster way to coupler pipes 30, 40 for HDD or other operations while maintaining the strong connections. Instead of requiring welding on-site with all the welding tools and supplies, a small hydraulic machine can be used to connect pipes to coupler. In some cases, coupler 10 could even be connected to one pipe at another location, for example a location of manufacture or storage. Other past couplers fit on the outside of pipes with inner gripping rings or teeth. However, such past couplers could not maintain a tight connection when deformable (e.g., PE) pipes were under tensile forces and contracting. Coupler 10, by having gripping teeth on an outer circumference, provides a simple, reliable and secure way of ensuring pipes stay coupled together, even under tensile forces, without the need for additional gripping rings, welding or glue. Additionally, the materials of coupler 10 and pipes 30, 40 could be chosen to add (or reduce) frictional gripping force depending on the coupling strength required for the application.

Figures 3a-3b show coupler 10 with a further embodiment of pipes 30', 40'. In the embodiment shown in Figs. 3a-3b, pipes 30', 40' have complementary coupling features to secure to teeth 14, 24 of coupler 10. Such complementary coupling features are shown as circumferential grooves 42 on the inner diameters of pipes 30', 40' at the ends. Pipes 30', 40' can have equal numbers of complementary features or can have complementary features to interact with only some of the teeth 14, 24 (or other securing features) on coupler 10. While the complementary coupling features 42 are shown as grooves, they could be teeth or other structural features which can connect to features on coupler 10.

Coupler 10 and pipes 30', 40' secure together in the same manner as those shown and described in Figs. 2a-2b. The additional complementary coupling features in pipes 30', 40' provide additional coupling forces, and in some cases could be used to give an indication (tactile or audio feedback) towards the coupler 10 and pipe being fully coupled together.

Pipes (and particularly the end profiles of pipes 30, 30', 40, 40') of Figs. 2a - 3b could be formed though a number of methods, for example, hot forming combined with machining, injection moulding parts and connecting or welding to pipes, etc.

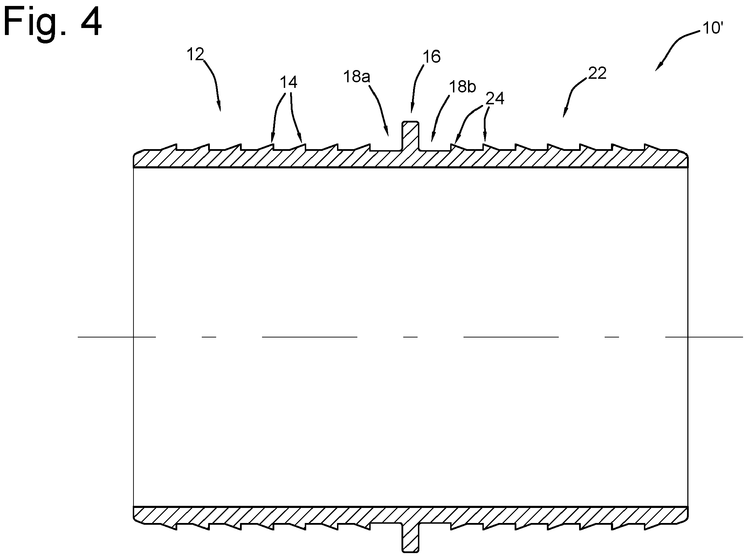

Figure 4 shows a further embodiment of a coupler 10'. Coupler 10' is similar to coupler 10 shown in Figs. 1-3b, only includes on each of first portion 12 and second portion 22 seven circumferential teeth 14, 24 extending outwards. Teeth 14, 24 extend toward end stop 16, and are spaced evenly along first portion 12 and second portion 22, still leaving grooves 18a, 18b for one or more seals directly adjacent to end stop 16. Such a coupler 10' illustrates how different shapes, amounts, spacing, etc. of teeth 14, 24 can be used to form a coupler which will provide the correct coupling force needed. Additionally, the use of fewer teeth can enable easier manufacture and in some cases use less material.

In some embodiments, it could even be beneficial to vary the shape (angle, height, radii) of the teeth and/or distance between the teeth within a particular pipe and/or coupler. This can help to obtain an even or homogeneous shear force over the coupler and pipe length, and help avoid peak loads. In this way it can be arranged that each tooth contributes to the same extent in transferring the tensile load from the pipe to the coupler. In other embodiments, all teeth are shaped and spaced equally on the same coupler, which can lead to backup gripping should a pipe slip over one circumferential tooth on a coupler.

While the couplers have been shown with two openings for receiving pipes, other embodiments of the coupler can have one or more than two openings for coupling to different numbers of pipes. When the coupler has one opening, the second portion can be, for example, a stopper to seal the pipe. Additionally, the number and/or shape of teeth and/or complementary coupling features can differ from those shown in the Figures.

Figures 5 and 6 show further embodiments of a coupler comprising a first and second tube secured to each other to form one tubular body. Features of the coupler that have already been described above with reference to the first two embodiments may also be present in the further embodiments shown in figures 5 and 6 and will not all be discussed here again. For the discussion with reference to figures 5 and 6, like features are designated with similar reference numerals preceded by 100, to distinguish the embodiments.

Figure 5A schematically shows cross-sectional view of a coupler 110 with a first pipe 130 and second pipe 140 connected to each other through the coupler 110. The coupler 110 comprises a first tube 150 and a second tube 160, which are connected to each other at a central portion 116 of the coupler 110. Around the central portion 116 a sleeve 170 is provided that allows to selectively secure the first and second tube 150,160 to each other. The sleeve 170 comprises two or more parts that are engaged with each other using pins 180. It will be understood that other fasteners may be provided alternatively or in addition to these pins 180, for example nails, screws or bolts.

Each of the first tube 150 and second tube 160 are provided with an outer end that is substantially planar. The opening defined by the outer end lies substantially within one plane.

Figure 5B shows a cross-sectional view of the first tube 150. The first tube 150 has a first portion 112 to grip the pipe 130 and a mating portion 154 that is configured to together with a mating portion of the second tube 160 form the central portion 116 of the coupler 110. The first portion 112 comprises teeth 114, which can be arranged in any configuration as previously described in relation to the other embodiments of the coupler 10, 10'. The first portion 112 has a length L_{G} of approximately 100 mm in embodiments suitable for coupling pipes of about 160 mm outer diameter, with a wall-thickness of 9.5 mm. The length L_{G} indicates the length of the tube that is received within the pipe 130.

The first tube 150 and second tube 160 are substantially identical in this embodiment. This eases the production as both the first and second tube 150, 160 can be made using the same process. Nevertheless, it will be understood that the second tube 160 may also comprise a second portion with a different number, configuration and/or shape of teeth, or have a different length L_{G}.

The mating portion 154 of the first tube 150 is provided with a mating surface 156 complementary to a surface of the sleeve 170 to engage with. In this embodiment, the mating surface 156 comprises a groove, yet it will be understood that in embodiments the mating surface 156 may also have a different shape.

Fig. 5C shows an exploded view of the sleeve 170. The sleeve 170 comprises two half cylinders 176, 178 configured to together form a sleeve around the two tubes 150, 160. The first half cylinder 176 has openings 174 in an outer circumferential surface for entering the pins 180 and the second half cylinder has pin openings 172 in the second half cylinder 178.

The tubes 150, 160 can already be inserted in the pipes 130, 140 at a different location (e.g., at a manufacturing or storage facility) and therefore the assembly at location can be very easy and quick. Moreover, no special tools are required to connect the pipes 130, 140, which also makes the assembly safe to install. In addition, the coupling of the pipes 130, 140 can take place will performing the horizontal directional drilling, which may both save time as well as space.

Figure 6 shows another embodiment of a coupler 110' comprising separate first and second tubes 150', 160' to form the tubular body. In this embodiment, the first portion 112' of the coupler 110' on the first tube 150' and the second portion 122' of the coupler 110' on the second tube 160' can be identical, but the mating portions 154', 164' are complementary to each other. The first tube is provided with a socket end portion and configured to receive a mating spigot portion of the second tube. It will be understood that various configurations involving complementary socket and spigot fittings may be used to successfully couple the tubes.

In this embodiment, the mating portions 154', 164' are each provided with a recess to together define a keyway 190 that is configured to house a key 190. A rubber seal 194 is arranged to provide a leak-free connection between the two tubes 150', 160' that form the tubular body.

The tubes 150, 150',160, 160' are typically each made in one part, for example through injection moulding and/or machining. The tubes 150,150',160,160' are typically formed of a plastic material, for example, Polyoxymethylene (POM), Polyether ether ketone (PEEK), or Polyvinyl chloride (PVC); though in some cases could be formed of other materials.

In summary, coupler 10, 10', 110, 110' is able to provide a strong coupling force to one or more pipes 30, 40, 130, 140 and a smooth constant inner diameter throughout the pipeline without the need for welding or other connection pieces (and the additional time, tools and material needed for the welding or other connection pieces). The circumferential outer teeth on each of first and second portions 12, 22, 112, 122 connect to inner diameters of pipes 30, 40, 130, 140 to provide a strong coupling force, particularly when the pipes and/or pipeline is under tensile forces. The smooth, constant inner diameter through pipes and coupler provides a pathway for cables to be pulled without the risk of damage from large seams or changes in diameter, and provides for less friction when pulling the cables through.

In the foregoing description of the figures, the invention has been described with reference to specific embodiments thereof. It will, however, be evident that various modifications and changes may be made thereto without departing from the scope of the invention as summarized in the attached claims. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims. In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A coupler for coupling to a pipe for protecting cables underground, the coupler comprising
a tubular body comprising:
a first portion comprising a plurality of teeth on an outer side;
a second portion comprising a plurality of teeth on an outer side; and
a central portion connecting the first portion and the second portion,
wherein the tubular body has at least two substantially planar outer ends.

2. The coupler of any of the preceding claims, wherein the tubular body is substantially smooth inside, preferably wherein the tubular body has a substantially consistent inner diameter throughout.

3. The coupler of claim 1 or 2, wherein the tubular body is formed of a first tube comprising the first portion and a second tube comprising the second portion, and wherein the central portion comprises part of the first tube and part of the second tube.

4. The coupler of claim 3, wherein the coupler further comprises a securing mechanism for selectively securing the first tube to the second tube.

5. The coupler of claim 4, wherein the securing mechanism comprises a sleeve configured to be fastened around the central portion using one or more fasteners.

6. The coupler of any of claims 2 to 4, wherein the first tube is provided with a socket end and the second tube is provided with a spigot end, preferably wherein the securing mechanism comprises a key ring.

7. The coupler of any of the preceding claims, wherein the central portion comprises a stop edge extending circumferentially outward from the central portion, preferably wherein the central portion further comprises one or more grooves on the side of the stop edge.

8. The coupler of any of the preceding claims, wherein the teeth extend circumferentially outward and toward the central portion on each of the first portion and the second portion, preferably wherein the plurality of teeth extend at an angle of about 10 degrees to 45 degrees with respect to the horizontal.

9. The coupler of any of the preceding claims, wherein each of the first portion and the second portion has 2-20 teeth.

10. The coupler of any of the preceding claims, wherein the coupler is formed of a plastic material, preferably Polyoxymethylene (POM), Polyether ether ketone (PEEK), or Polyvinyl chloride (PVC).

11. A first pipe with a coupler according to any of the preceding claims, the first pipe connected to the first portion of the coupler with an inner diameter of the first pipe connecting around the plurality of teeth of the first portion of the coupler or part thereof, preferably wherein the first pipe has a first inner diameter and a second inner diameter, wherein the second inner diameter is larger than the first inner diameter and the second inner diameter fits around the first portion of the coupler or part thereof and more preferably wherein the first inner diameter is substantially equal to the inner diameter of the coupler.

12. The first pipe with coupler of claim 11, wherein the first pipe comprises one or more complementary coupling features on an inner circumference for connecting to the coupler, preferably wherein the one or more complementary coupling features are complementary in shape to the plurality of teeth on the first portion of the coupler.

13. A method of forming a coupler for coupling to a pipe for protecting cables underground, the method comprising:
forming a first portion with a tubular body and a plurality of circumferential teeth on an outer side of the tubular body and a substantially planar outer end;
forming a second portion with a tubular body and a plurality of circumferential teeth on an outer side of the tubular body and a substantially planar outer end; and
forming a central portion with a stop edge connecting the first portion and second portion.

14. The method of claim 13, wherein the method includes machining and/or injection moulding.

15. The method of claim 14 further comprising forming a groove on at least one side of the stop edge, preferably at each side of the stop edge.
